# EUROPEAN PATENT SPECIFICATION

(11) **EP 2 381 162 B1**
(45) Date of publication and mention of the grant of the patent: **03.07.2013**
(21) Application number: 11162423.5
(22) Date of filing: 14.04.2011
(51) Int. Cl.: F21S 8/12, F21V 14/08, F21V 11/16, B60Q 1/08

(54) **A vehicular illumination lamp**
Fahrzeugbeleuchtungslampe
Lampe d'éclairage de véhicule

(30) Priority: 23.04.2010 JP 2010099758
(43) Date of publication of application: 26.10.2011
(73) Proprietor: KOITO MANUFACTURING CO., LTD., Tokyo (JP)
(72) Inventor: Komatsu, Motohiro, Shizuoka-shi Shizuoka (JP)
(74) Representative: Finnie, Peter John

(56) References cited:
- WO-A1-2009/039882
- WO-A1-2011/047751
- WO-A1-2011/121013
- DE-A1- 10 354 104
- DE-A1-102009 032 019
- JP-A- 7 137 574
- US-A1- 2009 086 500

## Description

### Technical Field

The present invention relates to a vehicular illumination lamp that is configured so as to form an additional light distribution pattern that is added to a low beam distribution pattern when forming a high beam distribution pattern.

### Background to the Invention

Conventional vehicular illumination lamps that include a lamp unit for forming an additional light distribution pattern are known.

For example, Japanese Patent Application Laid-Open (Kokai) No. 2007-179969 describes a vehicular illumination lamp that is configured so as to form an additional light distribution pattern with a lamp unit that uses a plurality of light emitting elements as a light source.

The vehicular illumination lamp described in Japanese Patent Application Laid-Open (Kokai) No. 2007-179969 has a configuration in which the plurality of light emitting elements is disposed adjacent to one another in the horizontal direction near a rear focal plane of a projection lens, and an additional light distribution pattern is formed by synthesizing light distribution patterns that are formed as inverted projection images from each light emitting element.

Japanese Patent Application Laid-Open (Kokai) No. 2007-179969 describes a system configured such that an on-board camera is used to detect a pedestrian ahead of a vehicle, and a detection result thereof is displayed on a travel monitor or communicated to the driver of the vehicle by voice from a speaker.

According to the vehicular illumination lamp described in Japanese Patent Application Laid-Open (Kokai) No. 2007-179969, a portion of the plurality of light emitting elements is controlled to turn on and off such that road visibility ahead of the vehicle can be increased without generating glare for the driver of an oncoming vehicle.

However, the vehicular illumination lamp described in Japanese Patent Application Laid-Open (Kokai) No. 2007-179969 does not have a configuration that actively irradiates only an applicable object when there is an applicable object such as a pedestrian ahead of the vehicle. Accordingly, further improvements can still be made in terms of handling emergency situations such as when a pedestrian suddenly runs out into the road in front of a vehicle while the vehicle travels using a low beam, for example.

Meanwhile, the system described in Japanese Patent Application Laid-Open (Kokai) No. 2005-267030 is designed to communicate that there is a pedestrian ahead of the vehicle to the driver of the vehicle if this occurs. However, the means of communication are a display on a travel monitor or a voice from a speaker, which cannot intuitively alert the driver of the vehicle to the presence and location of the pedestrian.

Document WO 2011/121013 having a valid priority date prior to the filing date of the application but being published after the filing date of the application discloses the features of the preamble of claim 1.

### Summary of the Invention

A vehicular illumination lamp according to the present invention is configured so as to form an additional light distribution pattern that is added to a low beam distribution pattern when forming a high beam distribution pattern. The vehicular illumination lamp is characterized by including: a lamp unit that is a lamp unit for forming the additional light distribution pattern, the lamp unit including a projection lens that is disposed on an optical axis that extends in a vehicle front-back direction, a light source that is disposed more rearward than a rear focal point of the projection lens, a reflector that reflects light from the light source toward the projection lens, a movable shade that is disposed between the reflector and the projection lens, and an actuator that moves the movable shade between a light shielding position at which among reflected light from the reflector light other than light that contributes to forming a center area of the additional light distribution pattern is shielded and a non-light shielding position at which such shielding is not performed; detection means for detecting a specific applicable object present ahead of a vehicle; a swivel mechanism that turns the lamp unit in a horizontal direction; and drive control means for, when the applicable object is detected by the detection means during vehicle travel using a low beam, driving the swivel mechanism to turn the lamp unit to a position at which the center area of the additional light distribution pattern illuminates the applicable object in a state with the light source lit and the actuator driven to move the movable shade to the light shielding position.

In a vehicular illumination lamp according to the present invention, a projector the rotating shaft member includes a pair of left and right projection portions that projects in a radial direction with respect to the horizontal axis line; and characterised in that the rotating shaft member includes a concave curved surface portion with a center section positioned near the optical axis formed with a projection portion that projects in a radial direction with respect to the horizontal axis line.

In a vehicular illumination lamp according to the present invention, a projector type lamp unit that includes a movable shade is used as a lamp unit for forming an additional light distribution pattern. When the presence of a specific applicable object is detected ahead of a vehicle while the vehicle travels using a low beam, a light source of the lamp unit is lit and the movable shade is moved to a light shielding position. In this state, the lamp unit is turned to a position at which a center area of the additional light distribution pattern illuminates the applicable object. Thus, the following operation and effects can be obtained.

Namely, with the movable shade moved to the light shielding position, only the center area of the additional light distribution pattern is irradiated. By turning the lamp unit to a position at which the center area of the additional light distribution pattern illuminates the applicable object, it is possible for only the applicable object to be illuminated by a localized light distribution pattern. Here, the localized light distribution pattern is formed as an addition to a low beam distribution pattern. Therefore, it is possible for only the applicable object to be illuminated by the localized light distribution pattern. Consequently, when the applicable object is present ahead of the vehicle, the presence and location of the applicable object can be communicated to the driver of the host vehicle as information that the driver of the host vehicle can directly recognize by sight.

Thus, according to the present invention, when there is a pedestrian or the like ahead of the vehicle, it is possible to intuitively alert the driver of the host vehicle to the presence and location of the pedestrian or the like. Therefore, in the event of an emergency situation such as a pedestrian suddenly running out into the right while the vehicle travels using a low beam, the driver of the host vehicle can be prompted to take swift action and respond to the situation.

In the constitution described above, although it was noted above that the specific constitution of the movable shade is not particularly limited, the movable shade may be constituted by a rotating shaft member that is disposed along a horizontal axis line that extends in a vehicle width direction below the optical axis, and configured so as to be rotatable about the horizontal axis line. Further, the rotating shaft member may include a pair of left and right projection portions that projects in a radial direction with respect to the horizontal axis line. With this constitution, the movable shade can be configured from a small number of components. In addition, when adopting such a constitution, an outer peripheral surface shape of the rotating shaft member may be modified, thus making it possible to newly set a rotation angle position at which a light distribution pattern can be formed with a different shape from the additional light distribution pattern formed when the rotating shaft member is at the non-light shielding position and the localized light distribution pattern formed when the rotating shaft member is at the light shielding position. This increases the number of variations of light distribution.

### Brief Description of the Drawings

Examples of the present invention will now be described in detail with reference to the accompanying drawings, in which:
FIG. 1 is a frontal view that shows a vehicular illumination lamp according to an embodiment of the present invention.
FIG. 2 is a cross-sectional view taken along a line II-II in FIG. 1.
FIG. 3 is a cross-sectional view taken along a line III-III in FIG. 2.
FIG. 4 shows perspective views of a movable shade by itself in the vehicular illumination lamp, where FIG. 4A is a non-light shielding position, FIG. 4B is a first light shielding position, FIG. 4C is a second light shielding position, and FIG. 4D is a third light shielding position.
FIG. 5 shows frontal views of the movable shade by itself, similar to FIG. 4.
FIG. 6 shows drawings of light distribution patterns formed on a virtual vertical screen positioned 25 meters in front of the vehicular illumination lamp by light that is irradiated forward from the lamp when the movable shade is in FIG. 6A the non-light shielding position, and FIG. 6B the first light shielding position.
FIG. 7 shows drawings of light distribution patterns when the movable shade is in FIG. 7C the second light shielding position, and FIG. 7D the third light shielding position.

### Detailed Description

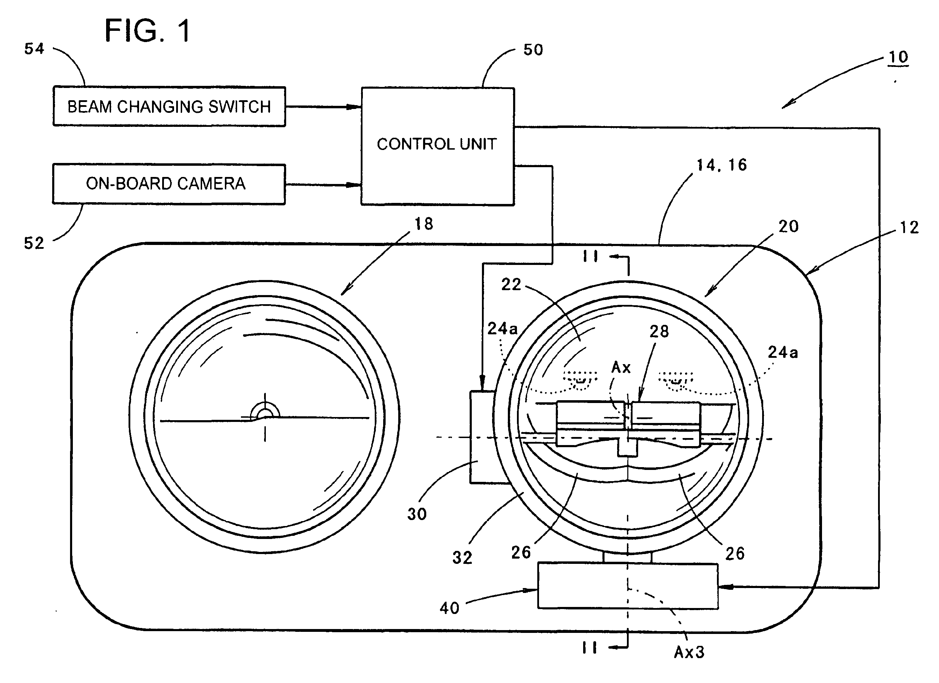

FIG. 1 is a frontal view showing a vehicular illumination lamp 10 according to an embodiment of the present invention.

As shown in the drawing, the vehicular illumination lamp 10 according to the present embodiment includes a lamp main body 12, a control unit 50, and an on-board camera 52. The control unit 50 is input with a beam change signal from a beam changing switch 54 for changing between a low beam and a high beam.

The lamp main body 12 has a configuration that accommodates two lamp units 18, 20 within a lamp chamber that is formed by a lamp body 14 and a plain translucent cover 16 attached to a front end opening portion of the lamp body 14.

The lamp unit 18 is a lamp unit used for forming a low beam distribution pattern. The lamp unit 18 is configured as a projector type lamp unit.

The lamp unit 20 is a lamp unit used for forming an additional light distribution pattern that is added to the low beam distribution pattern when forming a high beam distribution pattern. The lamp unit 20 is configured as a projector type lamp unit.

The lamp unit 20 is supported on the lamp body 14 through a swivel mechanism 40, and driving of the swivel mechanism 40 turns the lamp unit 20 in the horizontal direction around a vertical axis line Ax3.

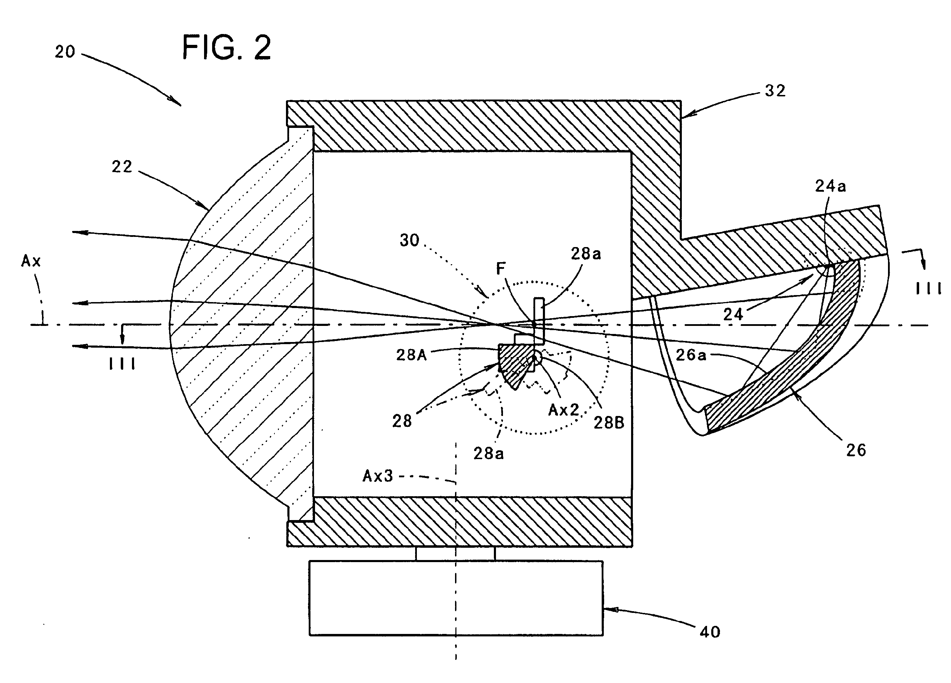

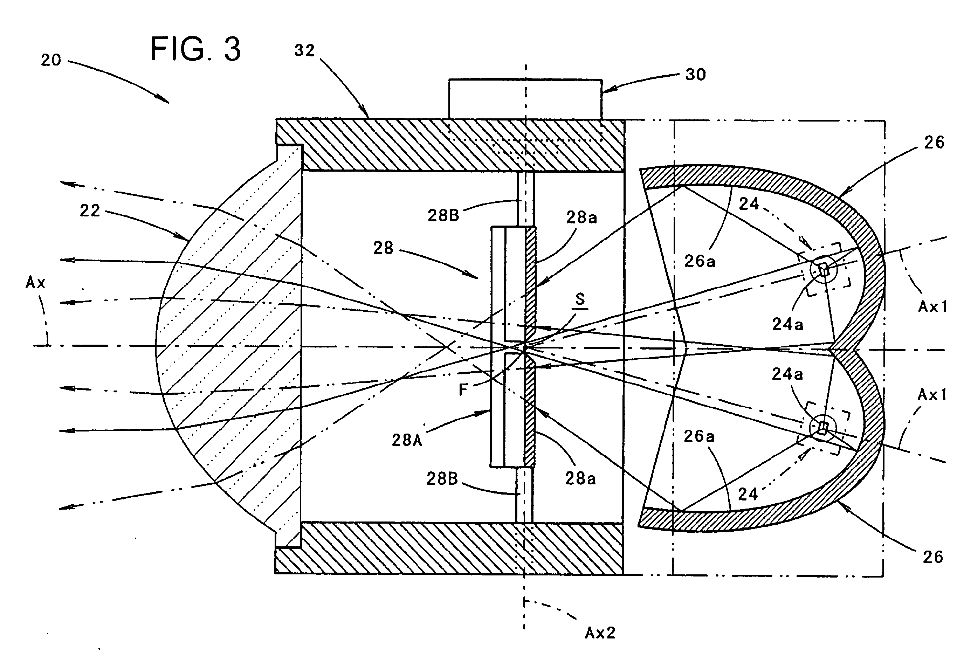

FIG. 2 is a cross-sectional view taken along a line II-II in FIG. 1, and shows the lamp unit 20 with the swivel mechanism 40. FIG. 3 is a cross-sectional view taken along a line III-III in FIG. 2.

As shown in these drawings, the lamp unit 20 has a configuration that includes a projection lens 22, a pair of left and right light sources 24a, a pair of left and right reflectors 26, a movable shade 28, an actuator 30, and a holder 32 that supports these.

The projection lens 22 is formed from a plane convex aspherical lens having a convex front face and a flat rear face. The projection lens 22 is disposed on an optical axis Ax that extends in the vehicle front-back direction. The projection lens 22 projects a light source image formed on a rear focal plane of the projection lens 22 as an inverted image on a virtual vertical screen in front of the lamp.

Each of the pair of left and right light sources 24a is a light emitting chip of a white light emitting diode 24. The left and right light sources 24a face generally downward at relatively symmetrical positions, and are disposed at locations that are more rearward than a rear focal point F of the projection lens 22 and diagonally upward and to the right and left of the optical axis Ax.

Each of the pair of left and right reflectors 26 is disposed at a symmetrical position relative to each other so as to cover each of the pair of left and right light sources 24a in a general half-dome configuration from below. The pair of left and right reflectors 26 is integratedly formed in such case.

A reflective surface 26a of each reflector 26 is configured by a curved surface with a substantially elliptical curved surface that has a long axis on an axis line Ax1 that extends diagonally downward and forward within a vertical plane including the optical axis Ax, and whose first focal point is a light emitting center of each light source 24a. The eccentricity of the reflective surface 26a is set so as to gradually decrease from a horizontal cross section toward a vertical cross section. Accordingly, each reflector 26 generally converges light from each light source 24a somewhat forward of the rear focal point F within the vertical cross section, and moves the convergence position considerably forward within the horizontal cross section.

In such case, the pair of left and right reflectors 26 is disposed such that, in a plane view, the axis line Ax1 that is the center axis thereof intersects the optical axis Ax in the vicinity of the rear focal point F, thus increasing the condensing characteristic of reflected light from each reflector 26 on the rear focal point F.

The movable shade 28 is constituted by a rotating shaft member that is disposed along a horizontal axis line Ax2 that extends in the vehicle width direction below the optical axis Ax, and configured so as to be rotatable about the horizontal axis line Ax2. In such case, the position of the horizontal axis line Ax2 in the front-back direction is set such that the horizontal axis line Ax2 passes directly below the rear focal point F.

A main body portion 28A of the rotating shaft member that constitutes the movable shade 28 has a complex outer peripheral surface shape, and left and right end portions 28B of the rotating shaft member are formed into a cylindrical shape. The movable shade 28 is rotatably supported by the holder 32 at the left and right end portions 28B.

The actuator 30 is constituted by a stepping motor or the like, and fixedly supported by the holder 32 in a state of coupling with one among the left and right end portions 28B of the movable shade 28. Driving of the actuator 30 rotates the movable shade 28. The movable shade 28 can be selectively stopped at four rotation angle positions (this will be described later).

The lamp unit 20 is coupled to the swivel mechanism 40 at a lower end portion of the holder 32. In such case, the swivel mechanism 40 is disposed such that the vertical axis line Ax3 that is the rotation center thereof passes through the optical axis Ax.

As shown in FIG. 1, the actuator 30 and the swivel mechanism 40 are driven by drive control signals from the control unit 50, which are based on input signals from the beam changing switch 54 and the on-board camera 52. The control unit 50 also performs an on/off control of each light source 24a of the lamp unit 20 based on the input signals from the beam changing switch 54 and the on-board camera 52.

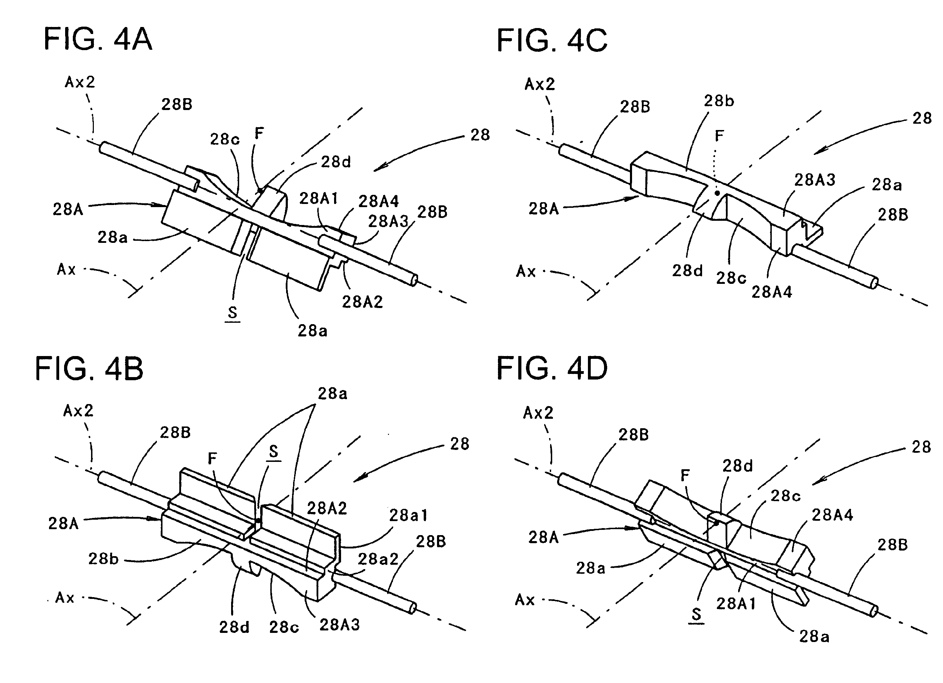

FIG. 4 shows perspective views of the movable shade 28 by itself. Here, FIG. 4A to FIG. 4D in the drawing show the movable shade 28 in each of the four rotation angle positions.

FIG. 4A is a view that shows the movable shade 28 at a non-light shielding position where reflected light from the pair of left and right reflectors 26 is not shielded. FIG. 4B is a view that shows the movable shade 28 at a first light shielding position where, excluding light that contributes to forming a center area of the additional light distribution pattern, reflected light from the pair of left and right reflectors 26 is shielded. FIG. 4C is a view that shows the movable shade 28 at a second light shielding position where light that contributes to forming an upper area of the additional light distribution pattern among reflected light from the pair of left and right reflectors 26 is shielded. FIG. 4D is a view that shows the movable shade 28 at a third light shielding position where light that contributes to forming an upper center area of the additional light distribution pattern among reflected light from the pair of left and right reflectors 26 is shielded.

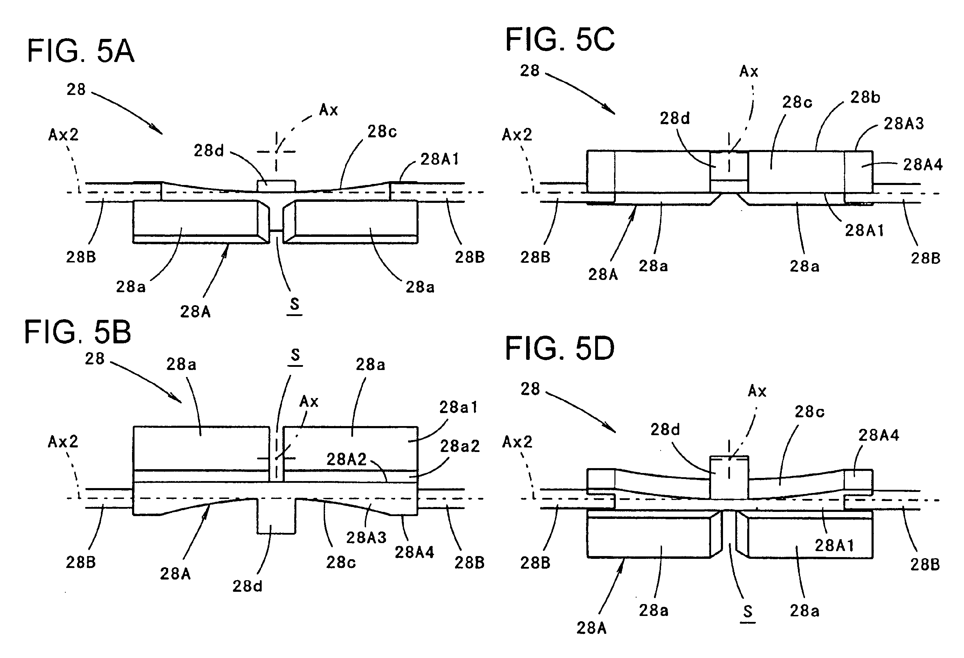

FIG. 5 shows frontal views of the movable shade 28 by itself. Here, FIG. 5A to FIG. 5D in the drawing show the movable shade 28 in each of the four rotation angle positions corresponding to FIGS. 4A to 4D.

As shown in these drawings, the main body portion 28A of the movable shade 28 has an oblong-shaped cross section and extends along the horizontal axis line Ax2. The horizontal axis line Ax2 is positioned on a first side wall surface 28A1 of the main body portion 28A.

In the main body portion 28A, a second side wall surface 28A2 adjacent to the first side wall surface 28A1 is formed with a pair of left and right projection portions 28a that project in the radial direction with respect to the horizontal axis line Ax2.

The pair of left and right projection portions 28a have shapes that are symmetrical about the optical axis Ax. Each projection portion 28a is formed from an upright wall portion 28a1 and a base wall portion 28a2, and formed so as to extend along the horizontal axis line Ax2 with an L-shaped cross section. The base wall portion 28a2 of each projection portion 28a is formed so as to somewhat protrude from the first side wall surface 28A1, whereby an inner wall surface of the upright wall portion 28a1 (i.e., a wall surface that extends toward a distal end surface from a position on an inner edge line of an L-shaped corner portion) is positioned on a plane that includes the horizontal axis line Ax2.

A slit-like space S is formed between the pair of left and right projection portions 28a. The space S is formed with a constant width in a lamp frontal view. In such case, a space-S-side end surface of the upright wall portion 28a1 of each projection portion 28a is formed so as to spread out in a tapered shape from an inner wall surface thereof toward an outer wall surface.

In the main body portion 28A, a third side wall surface 28A3 adjacent to the second side wall surface 28A2 is formed into a planar shape. Here, the third side wall surface 28A3 is constituted as a mirror surface 28b whose face has been mirror finished.

In the main body portion 28A, a fourth side wall surface 28A4 adjacent to the third side wall surface 28A3 is formed with an arc-shaped concave curved surface portion 28c that extends along the horizontal axis line Ax2. A center section of the concave curved surface portion 28c positioned near the optical axis Ax is formed with a projection portion 28d that projects in the radial direction with respect to the horizontal axis line Ax2. The projection portion 28d is formed with a constant left-right width, and has a fan-shaped side cross section. Here, the projection portion 28d is formed with a width that is wider than the space S between the pair of left and right projection portions 28a (e.g., a width that is approximately two to three times wider than the width of the space S). In addition, the projection portion 28d is formed so as to project in the radial direction more than a planar portion on both sides of the concave curved surface portion 28c on the fourth side wall surface 28A4.

As shown in FIGS. 4A and 5A, when the movable shade 28 is at the non-light shielding position, the first and fourth side wall surfaces 28A1, 28A4 of the main body portion 28A respectively face diagonally forward and diagonally upward. At the non-light shielding position, the overall main body portion 28A is positioned below the optical axis Ax, and hardly projects above the horizontal axis Ax2.

Thus, when the movable shade 28 is at the non-light shielding position, reflected light from the pair of left and right reflectors 26 is not shielded by the movable shade 28 and is incident to the projection lens 22. Note that in FIG. 2, the movable shade 28 at this non-light shielding position is indicated by a two-dot chain line.

As shown in FIGS. 4B and 5B, when the movable shade 28 is at the first light shielding position, the second side wall surface 28A2 of the main body portion 28A faces directly upward. At the first light shielding position, the main body portion 28A extends vertically upward such that the optical axis Ax is between the upright wall portions 28a1 of the pair of left and right projection portions 28a, and the space S between the projection portions 28a is formed into a vertically oblong shape in a frontal view.

Thus, when the movable shade 28 is at the first light shielding position, reflected light from the pair of left and right reflectors 26 is largely shielded by the movable shade 28 and only reflected light that passes through the space S is incident to the projection lens 22. Note that in FIGS. 1 to 3, the movable shade 28 at the first light shielding position is indicated by a solid line.

As shown in FIGS. 4C and 5C, when the movable shade 28 is at the second light shielding position, the third side wall surface 28A3 of the main body portion 28A faces directly upward. At the second light shielding position, in the main body portion 28A, the mirror surface 28b that constitutes the third side wall surface 28A3 extends along a horizontal plane that is slightly above the optical axis Ax.

Thus, when the movable shade 28 is at the second light shielding position, reflected light from the pair of left and right reflectors 26 is partially shielded by the main body portion 28A, and reflected light that passes above the main body portion 28A and reflected light that is further regularly reflected by the mirror surface 28b are incident to the projection lens 22.

As shown in FIGS. 4D and 5D, when the movable shade 28 is at the third light shielding position, the fourth side wall surface 28A4 of the main body portion 28A faces diagonally upward and forward. At the third light shielding position, in the main body portion 28A, the upper ends of a rear edge line of the concave curved surface portion 28c and a silhouette of the projection portion 28d appear in a frontal view. In such case, the rear edge line of the concave curved surface portion 28c is positioned below the optical axis Ax, and the upper end edge of the projection portion 28d extends along a horizontal plane that is slightly above the optical axis Ax. The position of the upper end edge of the projection portion 28d at such time is located slightly above the position of the mirror surface 28b of the main body portion 28A at the second light shielding position.

Thus, when the movable shade 28 is at the third light shielding position, reflected light from the pair of left and right reflectors 26 is partially shielded by the main body portion 28A, and reflected light that passes above the main body portion 28A is incident to the projection lens 22.

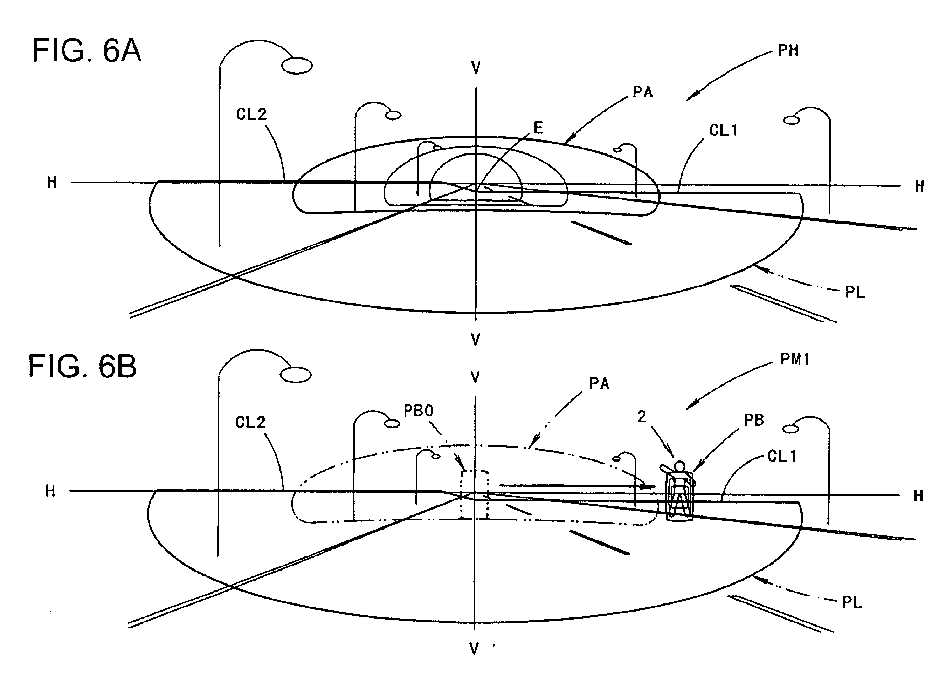

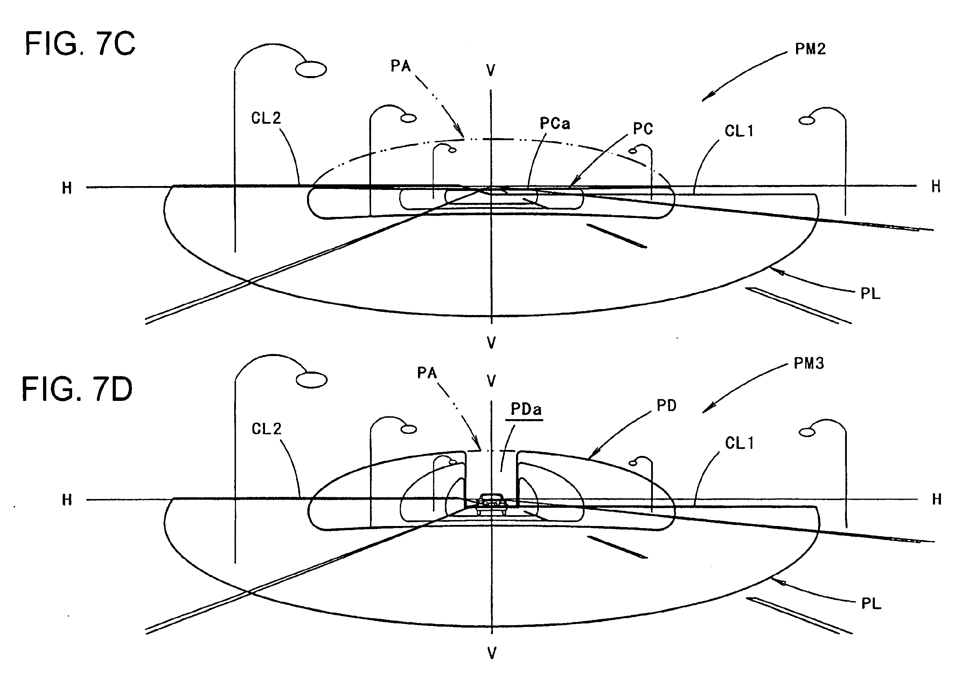

FIGS. 6 and 7 are drawings that illustrate light distribution patterns formed on a virtual vertical screen positioned 25 meters in front of a vehicle by light that is irradiated forward from the vehicular illumination lamp 10 according to the present embodiment.

The light distribution pattern shown in FIG. 6A is a high beam distribution pattern PH, which is formed as a light distribution pattern that synthesizes a low beam distribution pattern PL and an additional light distribution pattern PA.

The low beam distribution pattern PL is a light distribution pattern formed by irradiated light from the lamp unit 18, and formed as a low beam distribution pattern for left light distribution. A top end edge of the low beam distribution pattern PL has horizontal cut-off lines CL1, CL2 that are formed in a stepped fashion in the left-right direction.

The horizontal cut-off lines CL1, CL2 extend in the horizontal direction in a left-right stepped fashion with a line V-V serving as a boundary between the steps. The line V-V is a vertical line that intersects a vanishing point in the direction of the lamp front, that is, H-V To the right of the line V-V, the horizontal cut-off line CL1 is formed extending in the horizontal direction on the oncoming vehicle lane side; to the left of the line V-V, the horizontal cut-off line CL2 is formed extending in the horizontal direction a step higher than the horizontal cut-off line CL1 on the host vehicle lane side. However, an end portion of the horizontal cut-off line CL2 around the line V-V is formed as a diagonal cut-off line that extends at an inclination angle of 15 degrees diagonally upward to the left from an intersection of the horizontal cut-off line CL1 and the line V-V.

In the low beam distribution pattern PL, an elbow point E at the intersection of the horizontal cut-off line CL1 and the line V-V is positioned below H-V by approximately 0.5 to 0.6 degrees.

The additional light distribution pattern PA is a light distribution pattern formed by irradiated light from the lamp unit 20, and formed as a horizontally oblong light distribution pattern that extends narrowly out to both left and right sides with the line V-V at its center.

More specifically, the additional light distribution pattern PA is formed such that a lower end edge thereof extends generally in the horizontal direction below a line H-H that is a horizontal line passing through H-V, and an upper end edge thereof expands from both left and right end positions of the lower end edge toward the upper side in a substantially horizontally oblong elliptical shape. Here, the lower end edge of the additional light distribution pattern PA intersects the line V-V approximately 2 to 3 degrees below H-V, and the upper end edge of the additional light distribution pattern PA is formed so as to intersect the line V-V at approximately 3 to 5 degrees above H-V.

In the additional light distribution pattern PA, a hot zone that is an area of high intensity light is positioned in the vicinity of H-V. It should be noted that multiple closed curves in the additional light distribution pattern PA are iso-intensity curves that indicate the brightness increasing from their outer peripheral edges toward the center. Light distribution patterns PB, PC, PD described below are the same in this respect.

The additional light distribution pattern PA is formed when the pair of left and right light sources 24a are lit while the lamp unit 20 is in a normal state (that is, a state in which the lamp unit 20 is not turned and driven by the swivel mechanism 40), and the movable shade 28 is at the non-light shielding position.

The light distribution patterns shown in FIGS. 6B, 7C, and 7D are intermediate light distribution patterns between the high beam distribution pattern PH and the low beam distribution pattern PL.

An intermediate light distribution pattern PM1 shown in FIG. 6B is a synthesized light distribution pattern that is formed by adding the light distribution pattern PB, which is a portion of the additional light distribution pattern PA, to the low beam distribution pattern PL.

Here, the light distribution pattern PB shifts a localized light distribution pattern PBO (indicated by a two-dot chain line in the drawing) that cuts out a section of the additional light distribution pattern PA, indicated by a two-dot chain line in the drawing, positioned near H-V in a substantially vertically oblong shape.

The light distribution pattern PB is formed when the pair of left and right light sources 24a are lit while the lamp unit 20 is turned rightward from the normal state by driving of the swivel mechanism 40, and the movable shade 28 is rotated to the first light shielding position by the actuator 30.

In the control unit 50, when the presence of a pedestrian 2 is detected ahead of the vehicle by processing image data of a view ahead of the vehicle taken by the on-board camera 52, a left-right angle of deflection from the vehicle front direction to the location of the pedestrian 2 is calculated, and the lamp unit 20 is turned by driving the swivel mechanism 40 based on the calculation result.

Accordingly, the pedestrian 2 is illuminated by the irradiated light forming the light distribution pattern PB. Since the light distribution pattern PB is formed into a localized substantially vertically oblong shape, the driver of the host vehicle can be easily alerted to the direction in which the pedestrian 2 is located, and the risk of unintentionally directing glare at a driver of an oncoming vehicle or other people can be kept to a minimum. In addition, the light distribution pattern PB with a localized substantially vertically oblong shape has a lower end portion that is formed so as to extend band-like on the road ahead of the vehicle in the direction of the angle of deflection in which the pedestrian 2 is located. Therefore, the driver of the host vehicle can be more easily alerted to the location of the pedestrian 2.

The light distribution pattern PB is formed into a localized substantially vertically oblong shape because, when the movable shade 28 is at the first light shielding position, only light among reflected light from the pair of left and right reflectors 26 that passes through the slit-like space S formed between the pair of left and right projection portions 28a of the main body portion 28A is incident to the projection lens 22.

In order to ensure that the pedestrian 2 is appropriately illuminated by the light distribution pattern PB, the left-right width of the light distribution pattern PB is preferably set to a value within an angular range of 1 to 3 degrees (e.g., approximately 2 degrees). The left-right width of the light distribution pattern PB can be easily set based on the left-right width of the space S.

In order to ensure that the pedestrian 2 is sufficiently recognizable but not subjected to glare by irradiating the light distribution pattern PB, the position of the upper end edge of the light distribution pattern PB is preferably set within an angular range of 1.5 to 2.5 degrees (e.g., approximately 2 degrees) above the line H-H. The position of the upper end edge of the light distribution pattern PB can be easily set based on the lower end position of the space S (that is, the distance from the horizontal axis line Ax2 to the second side wall surface 28A2 of the main body portion 28A).

When the movable shade 28 is at the first light shielding position, an inner wall surface of the upright wall portion 28a1 on the pair of left and right projection portions 28a of the main body portion 28A is positioned on a vertical plane that is orthogonal to the optical axis Ax so as to pass through the rear focal point F of the projection lens 22. Therefore, the light distribution pattern PB is formed with a distinct outline.

Note that the space-S-side end surface of the upright wall portion 28a1 on the pair of left and right projection portions 28a of the main body portion 28A is formed so as to spread out in a tapered shape from the inner wall surface thereof toward the outer wall surface (at the first light shielding position, from a front wall surface toward a rear wall surface). Therefore, it is possible to take full advantage of the reflected light from the pair of left and right reflectors 26 in order to form the light distribution pattern PB.

An intermediate light distribution pattern PM2 shown in FIG. 7C is a synthesized light distribution pattern that is formed by adding the light distribution pattern PC, which is a portion of the additional light distribution pattern PA, to the low beam distribution pattern PL.

Here, the light distribution pattern PC is formed as a horizontally long light distribution pattern with a narrow up-down width that cuts out an upper area of the additional light distribution pattern PA indicated by a two-dot chain line in the drawing. An upper end edge PCa of the light distribution pattern PC is formed so as to generally extend in the horizontal direction in the vicinity of below the line H-H.

The light distribution pattern PC is thus formed because, when the movable shade 28 is at the second light shielding position, the mirror surface 28b that constitutes the third side wall surface 28A3 of the main body portion 28A extends along a horizontal plane that is slightly above the optical axis Ax. Accordingly, among reflected light from the pair of left and right reflectors 26, reflected light that passes above the main body portion 28A and reflected light that is further regularly reflected by the mirror surface 28b are incident to the projection lens 22. At such time, the upper end edge PCa of the light distribution pattern PC intersects the line V-V at a point between the line H-H and the horizontal cut-off line CL1 of the low beam distribution pattern PL (specifically, 0.2 to 0.3 degrees below H-V).

Adding the light distribution pattern PC to the low beam distribution pattern PL during high speed travel using a low beam can enhance the visibility of the road far ahead of the vehicle.

An intermediate light distribution pattern PM3 shown in FIG. 7D is a synthesized light distribution pattern that is formed by adding the light distribution pattern PD, which is a portion of the additional light distribution pattern PA, to the low beam distribution pattern PL.

Here, the light distribution pattern PD is formed as a light distribution pattern in which an oblong-shaped cut-out portion PDa is formed in an upper center area of the additional light distribution pattern PA indicated by a two-dot chain line in the drawing. The cut-out portion PDa of the light distribution pattern PD is formed with a left-right width of approximately 4 to 5 degrees with the line V-V at its center. A lower end edge of the cut-out portion PDa is formed so as to extend in the horizontal direction at approximately the same height as the horizontal cut-off line CL1 of the low beam distribution pattern PL.

The light distribution pattern PD is thus formed because, when the movable shade 28 is at the third light shielding position, the rear edge line of the concave curved surface portion 28c formed on the fourth side wall surface 28A4 of the main body portion 28A is positioned below the optical axis Ax. In addition, the upper end edge of the projection portion 28d formed at the center of the concave curved surface portion 28c in the left-right direction extends along a horizontal plane that is slightly above the optical axis Ax.

Adding the light distribution pattern PD to the low beam distribution pattern PL during high speed travel using a low beam can enhance the visibility of both left and right sections of the road far ahead of the vehicle, without directing glare at a driver of a preceding vehicle.

Next, the operation and effects of the present embodiment will be described.

In the vehicular illumination lamp 10 according to the present embodiment, a projector type lamp unit that includes the movable shade 28 is used as the lamp unit 20 for forming the additional light distribution pattern PA. In the lamp unit 20, when the pedestrian 2 that is a specific applicable object is detected based on image data from the on-board camera 52 in the control unit 50 during vehicle travel using a low beam, the pair of left and right light sources 24a is lit and driving of the actuator 30 moves the movable shade 28 to the first light shielding position. In this state, driving of the swivel mechanism 40 turns the center area of the additional light distribution pattern PA to a position at which the pedestrian 2 is illuminated. Therefore, the following operation and effects can be obtained.

Namely, with the movable shade 28 moved to the first light shielding position, only the center area of the additional light distribution pattern PA is irradiated. By turning the lamp unit 20 to a position at which the center area of the additional light distribution pattern PA illuminates the pedestrian 2, it is possible for only the pedestrian 2 to be illuminated by the localized light distribution pattern PB. Here, the localized light distribution pattern PB is formed as an addition to the low beam distribution pattern PL. Therefore, it is possible for only the pedestrian 2 to be relatively brightly illuminated. Consequently, when the pedestrian 2 is present ahead of the vehicle, the presence and location of the pedestrian 2 can be communicated to the driver of the host vehicle as information that the driver of the host vehicle can directly recognize by sight.

Thus, according to the present embodiment, when the pedestrian 2 or the like is present ahead of the vehicle, the driver of the host vehicle can be intuitively alerted to the presence and location of the pedestrian or the like. Therefore, in the event of an emergency situation such as the pedestrian 2 suddenly running out into the road while the vehicle travels using a low beam, the driver of the host vehicle can be prompted to take swift action and respond to the situation.

Particularly in the vehicular illumination lamp 10 according to the present embodiment, the movable shade 28 of the lamp unit 20 is constituted by a rotating shaft member that is disposed along the horizontal axis line Ax2 that extends in the vehicle width direction below the optical axis Ax, and configured so as to be rotatable about the horizontal axis line Ax2. The main body portion 28A of the rotating shaft member is configured to include the pair of left and right projection portions 28a that project in the radial direction with respect to the horizontal axis line Ax2. Therefore, the movable shade 28 can be configured from a small number of components.

In addition, the outer peripheral surface shape of the main body portion 28A of the movable shade 28 constituted as the rotating shaft member may be modified, thus making it possible to newly set a rotation angle position at which a light distribution pattern can be formed with a different shape from the additional light distribution pattern PA formed when the movable shade 28 is at the non-light shielding position and the localized light distribution pattern PB formed when the movable shade 28 is at the first light shielding position. This increases the number of variations of light distribution.

Specifically, in the present embodiment, the second and third light shielding positions are newly set as rotation angle positions at which the light distribution patterns PC, PD, which are different in shape from the additional light distribution pattern PA and the light distribution pattern PB, can be formed. Therefore, during high speed travel using a low beam, the visibility of the road far ahead of vehicle can be enhanced by adding the light distribution pattern PC to the low beam distribution pattern PL. Further, by adding the light distribution pattern PD to the low beam distribution pattern PL, the visibility of both left and right sections of the road far ahead of the vehicle can be enhanced without directing glare at a driver of a preceding vehicle.

In the embodiment described above, the lamp unit 20 is described as including the pair of left and right light sources 24a, and the pair of left and right reflectors 26. However, in terms of number, the light source 24a and the reflector 26 may both be provided in singular, or three or more of each may be provided.

In the embodiment described above, the light source 24a of the lamp unit 20 is described as a light emitting chip of the white light emitting diode 24. However, the same operation and effects as in the embodiment described above can still be obtained even if a light emitting portion of a discharge bulb or the like is used as a light source.

In the embodiment described above, the movable shade 28 is described as constituted by a rotating shaft member. However, other constitutions may obviously be adopted for the movable shade 28. For example, the movable shade may also be constituted by a plate-like member capable of rotation or linear reciprocating motion between the first light shielding position and the non-light shielding position.

In the embodiment described above, the lamp unit 18 of the vehicular illumination lamp 10 is configured so as to form a low beam distribution pattern for left light distribution as the low beam distribution pattern PL. However, even if the lamp unit 18 is configured so as to form a low beam distribution pattern for right light distribution, the same operation and effects as obtained by adopting the same configuration as the embodiment described above can still be achieved.

## Claims

1. A vehicular illumination lamp (10) that is configured so as to form an additional light distribution pattern that is added to a low beam distribution pattern when forming a high beam distribution pattern, the vehicular illumination lamp comprising:
a lamp unit (20) for forming the additional light distribution pattern, the lamp unit comprising a projection lens (22) that is disposed on an optical axis that extends in a vehicle front-back direction, a light source (24a) that is disposed more rearward than a rear focal point of the projection lens, a reflector (26) that reflects light from the light source toward the projection lens, a movable shade (28) that is disposed between the reflector and the projection lens, and an actuator (30) that moves the movable shade between a light shielding position at which among reflected light from the reflector light other than light that contributes to forming a center area of the additional light distribution pattern is shielded and a non-light shielding position at which such shielding is not performed;
detection means (52) for detecting a specific applicable object present ahead of a vehicle;
a swivel mechanism (40) that turns the lamp unit in a horizontal direction; and
drive control means for, when the applicable object is detected by the detection means during vehicle travel using a low beam, driving the swivel mechanism to turn the lamp unit to a position at which the center area of the additional light distribution pattern illuminates the applicable object in a state with the light source lit and the actuator driven to move the movable shade to the light shielding position,
wherein the movable shade (28) is constituted by a rotating shaft member that is disposed along a horizontal axis line that extends in a vehicle width direction below the optical axis, and configured so as to be rotatable about the horizontal axis line;
the rotating shaft member includes a pair of left and right projection portions (28a) that projects in a radial direction with respect to the horizontal axis line; and
**characterised in that** the rotating shaft member includes a concave curved surface portion (28c) with a center section positioned near the optical axis formed with a projection portion (28d) that projects in a radial direction with respect to the horizontal axis line.

## Patentansprüche

1. Fahrzeug-Beleuchtungslampe (10), die so konfiguriert ist, dass sie ein zusätzliches Lichtverteilungsmuster bildet, das bei der Bildung eines Fernlicht-Verteilungsmusters zu einem Abblendlicht-Verteilungsmuster hinzugefügt wird, wobei die Fahrzeug-Beleuchtungslampe Folgendes umfasst:
eine Lampeneinheit (20) zum Bilden des zusätzlichen Lichtverteilungsmusters, wobei die Lampeneinheit eine Projektionslinse (22), die auf einer optischen Achse angeordnet ist, die sich in einer von-Vorne-nach-Hinten-Richtung des Fahrzeugs erstreckt, eine Lichtquelle (24a), die weiter nach hinten angeordnet ist als ein hinterer Brennpunkt der Projektionslinse, einen Reflektor (26), der Licht von der Lichtquelle hin zu der Projektionslinse reflektiert, einen beweglichen Schirm (28), der zwischen dem Reflektor und der Projektionslinse angeordnet ist, und einen Stellantrieb (30), der den beweglichen Schirm bewegt, zwischen einer Licht abschirmenden Stellung, bei der unter reflektiertem Licht von dem Reflektor anderes Licht als Licht, das dazu beiträgt, einen Mittenbereich des zusätzlichen Lichtverteilungsmusters zu bilden, abgeschirmt wird, und einer Licht nicht abschirmenden Stellung, bei der eine solche Abschirmung nicht durchgeführt wird,
Erfassungsmittel (52) zum Erfassen eines spezifischen maßgeblichen Objektes, das vor einem Fahrzeug vorhanden ist,
einen Schwenkmechanismus (40), der die Lampeneinheit in einer horizontalen Richtung dreht, und
Antriebssteuerungsmittel, um, wenn das maßgebliche Objekt während der Fahrzeugfahrt unter Verwendung eines Abblendlichts durch die Erfassungsmittel erfasst wird, den Schwenkmechanismus anzutreiben, um die Lampeneinheit zu einer Stellung zu drehen, bei welcher der Mittenbereich des zusätzlichen Lichtverteilungsmusters das maßgebliche Objekt beleuchtet, in einem Zustand, in dem die Lichtquelle erleuchtet und der Stellantrieb angetrieben wird, um den beweglichen Schirm zu der Licht abschirmenden Stellung zu bewegen,
wobei der bewegliche Schirm (28) aus einem sich drehenden Schaftelement besteht, das entlang einer horizontalen Achsenlinie, die sich in einer Fahrzeug-Breitenrichtung unterhalb der optischen Achse erstreckt, angeordnet und so konfiguriert ist, dass es um die horizontale Achsenlinie gedreht werden kann,
wobei das sich drehende Schaftelement ein Paar aus einem linken und einem rechten Vorsprungsabschnitt (28a) einschließt, das in einer radialen Richtung in Bezug auf die horizontale Achsenlinie vorspringt, und
**dadurch gekennzeichnet, dass** das sich drehende Schaftelement einen konkaven gekrümmten Oberflächenabschnitt (28c) mit einer nahe der optischen Achse angeordneten Mittensektion einschließt, geformt mit einem Vorsprungsabschnitt (28d), der in einer radialen Richtung in Bezug auf die horizontale Achsenlinie vorspringt.

## Revendications

1. Lampe d'éclairage véhiculaire (10) configurée pour former un motif de distribution de lumière supplémentaire qui est ajouté à un motif de distribution de feux de croisement durant la formation d'un motif de distribution de feux de route, la lampe d'éclairage véhiculaire comprenant :
une unité de lampe (20) pour former le motif de distribution de lumière supplémentaire, l'unité de lampe comprenant une lentille de projection (22) qui est disposée sur un axe optique qui s'étend dans un sens avant-arrière du véhicule, une source de lumière (24a) qui est disposée plus vers l'arrière qu'un point focal arrière de la lentille de projection, un réflecteur (26) qui reflète de la lumière depuis la source de lumière vers la lentille de projection, un volet mobile (28) qui est disposé entre le réflecteur et la lentille de projection, et un actionneur (30) qui déplace le volet mobile entre une position faisant écran à la lumière à laquelle parmi la lumière réfléchie depuis le réflecteur il est fait écran à la lumière autre que la lumière qui contribue à la formation d'une zone centrale du motif de distribution de lumière supplémentaire et une position ne faisant pas écran à la lumière à laquelle cet écran n'est pas mis en place ;
un moyen de détection (52) pour détecter un objet applicable spécifique présent devant un véhicule ;
un mécanisme de pivotement (40) qui fait tourner l'unité de lampe dans un sens horizontal ; et
un moyen de commande d'entraînement pour, quand l'objet applicable est détecté par le moyen de détection durant le déplacement du véhicule utilisant des feux de croisement, entraîner le mécanisme de pivotement pour tourner l'unité de lampe sur une position à laquelle la zone centrale du motif de distribution de lumière supplémentaire éclaire l'objet applicable dans un état avec la source de lumière allumée et l'actionneur entraîné pour déplacer le volet mobile sur la position faisant écran à la lumière,
dans laquelle le volet mobile (28) est constitué par un élément d'arbre rotatif qui est disposé le long d'une ligne d'axe horizontale qui s'étend dans un sens de largeur du véhicule en dessous de l'axe optique, et configuré pour être rotatif autour de la ligne d'axe horizontale;
l'élément d'arbre rotatif comporte une paire de parties de projection gauche et droite (28a) qui fait saillie dans un sens radial par rapport à la ligne d'axe horizontale ; et
**caractérisé en ce que** l'élément d'arbre rotatif comporte une partie de surface courbe concave (28c) avec une section centrale positionnée près de l'axe optique formé avec une partie de projection (28d) qui fait saillie dans un sens radial par rapport à la ligne d'axe horizontale.
